# EUROPÄISCHE PATENTANMELDUNG

(11) **EP 1 045 344 A2**
(43) Veröffentlichungstag der Anmeldung: **18.10.2000**
(21) Anmeldenummer: 00108130.6
(22) Anmeldetag: 13.04.2000
(51) Int. Cl.: G06T 15/70

(54) **Simultationsverfahren zur Realzeit-Darstellung einer Umgebung**

(30) Priorität: 15.04.1999 DE 19917012
(71) Anmelder: DaimlerChrysler AG, 70567 Stuttgart (DE)
(72) Erfinder: Fligge, Ulrich, Dr., 81041 Deisenhofen (DE)

(57) **Zusammenfassung**

Verfahren zur Darstellung einer virtuellen Umwelt (11) auf eine virtuelle Abbildungsebene (21) in Realzeit zur Erzeugung einer zweidimensionalen Darstellung einer dreidimensionalen Szene, wobei zunächst eine Darstellung der ruhenden Objekte der virtuellen Umwelt (11) auf der virtuellen Abbildungsebene (21) und nachfolgend für jeden Iterationsschnitt die zeitveränderlichen Objektpunkte (15d, 15b) ermittelt werden und nur diejenigen Objektpunkte (15d) zur Darstellung kommen, die sich gegenüber dem vorangegangenen Iterationspunkt verändert haben und die näher an der Abbildungsebene (21) gelegen sind, als der im vorangegangenen Iterationsschnitt dargestellte Objektpunkt (15a).

## Beschreibung

Die Erfindung betrifft ein Simulationsverfahren zur Realzeit-Darstellung von Veränderungen der realen Umgebung.

Zur dreidimensionalen (3D) oder perspektivischen Realzeit-Darstellung von zeitveränderlichen Gegenständen an einem Diplay werden üblicherweise die vollständigen Abbildungen dieser zeitveränderlichen Gegenstände in jedem Berechnungszyklus, beispielsweise 20- bis 60mal pro Sekunde, im einzelnen neu berechnet. Ein solches Verfahren ist beispielsweise in der DE 3035213 C2 offenbart. Dies erfordert einen großen Rechenaufwand, der sich ungünstig auf den Entwicklungsaufwand und die Kosten solcher Systeme auswirkt.

Es ist daher die Aufgabe der Erfindung, ein Verfahren für eine realzeitmäßige Darstellung von zeitveränderlichen Gegenständen einer Umwelt zu schaffen, das einen geringeren Rechenaufwand erfordert.

Diese Aufgabe wird mit den Merkmalen des unabhängigen Anspruchs gelöst.

Die Erfindung wird im folgenden anhand der beigefügten Figuren beschrieben, die zeigen:

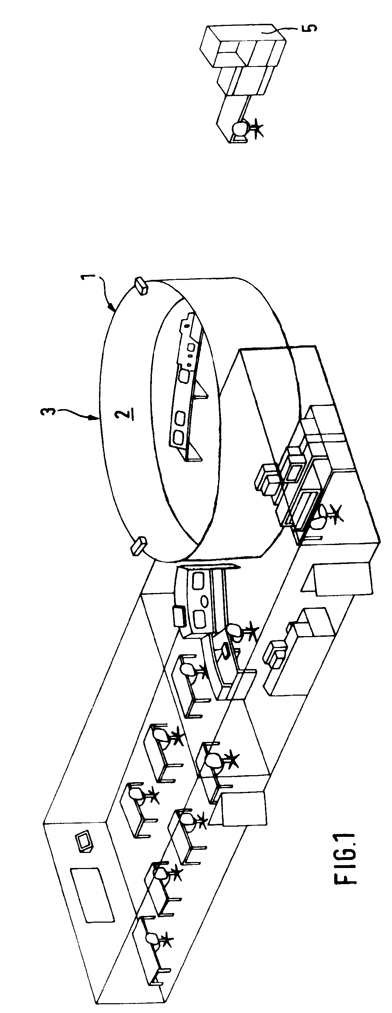

- Fig. 1: eine schematische Darstellung eines Anwendungsbeispiels des erfindungsgemäßen Verfahrens bzw. der erfindungsgemäßen Vorrichtung, das sich auf eine Trainingseinrichtung für Fluglotsen mit einem Bildschirm-Raum bezieht, in dem die Verkehrs-Situation einer zeitveränderlichen realen oder fiktiven Umgebung in Realzeit simuliert wird, und

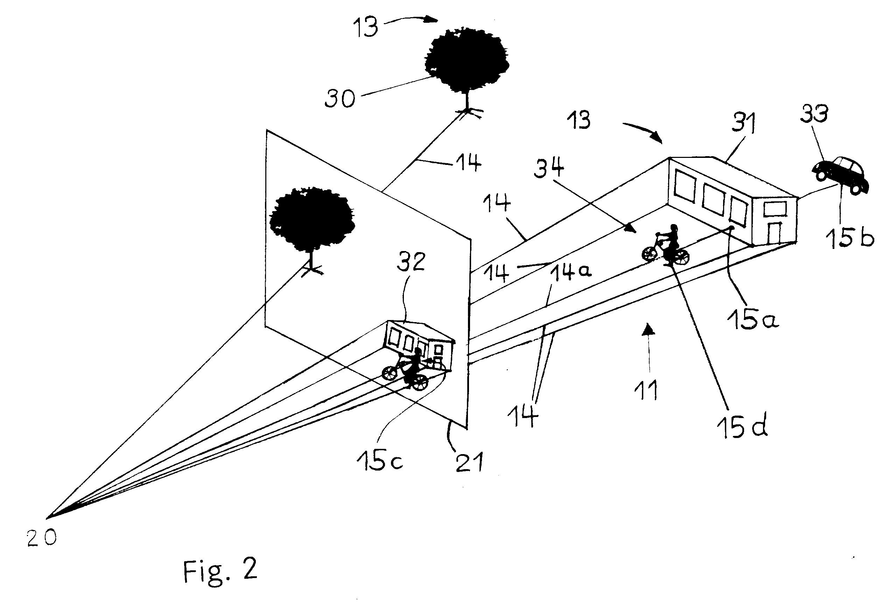

- Fig. 2: die schematische Darstellung der Abbildung von Gegenständen einer virtuellen dreidimensionalen Welt auf eine virtuelle Abbildungsebene, die als Basis für die Darstellung der darauf abgebildeten Gegenstände auf einem Monitor oder einer Leinwand dient.

Die Fig. 1 zeigt eine Trainingseinrichtung für Fluglotsen mit einem Simulationsraum 1. Der Simulationsraum 1 weist eine zylindrische Wand 3 auf, die gleichzeitig den Simulationsraum 1 in Umfangsrichtung begrenzt. Sich zu Trainingszwecken im Simulationsraum 1 befindliche Fluglotsen halten sich im Bereich des räumlichen Zentrums des Simulatiosraums 1 auf. Mittels eines Bildgenerators 5 und zumindest eines Projektors (nicht gezeigt) werden bildliche Darstellungen einer simulierten Umgebung auf die zylindrische Wand 3 projiziert, wobei sich die simulierte Umgebung vorzugsweise über die gesamte Innenfläche der zylindrischen Wand 3 erstreckt. Auf diese Weise hat jeder im Simulationsraum 1 befindliche Fluglotse eine Darstellung der simulierten Außenwelt in Umfangsrichtung über die gesamte zylindrische Wand 3, d.h. aus Sicht eines Fluglotsen bis zu einem Winkelbereich von 360°.

Zur Darstellung einer simulierten oder virtuellen dreidimensionalen Umwelt 11, die auch eine mittels Sensoren erfaßte reale Umwelt sein kann, werden vorzugsweise dreidimensionale Texturen oder Bildinhalte 13 dieser Umwelt 11 in einen Speicher eines Datenverarbeitungssystems abgespeichert. Diesen Texturen werden Eigenschaften zugefügt, beispielsweise die Größe der Texturen, die Farben, deren Entfernungen zu Bezugspunkten bzw. deren Positionen und ähnliches. Jede Textur umfaßt vorzugsweise einen Gegenstand oder einen Bestandteil der Umwelt 11, z.B. ein Haus, Flugzeuge, Fahrzeuge, Bepflanzungen, Fahrbahnen, Kultur- oder Bebauungseigenschaften. In der Fig. 2 sind beispielhaft als Bestandteile der Umgebung 11 ein Baum 30, ein Haus 31, ein Auto 33 und ein Fahrrad 34 und beispielhaft einige von einem Augenpunkt 20 ausgehende Projektionslinien 14 eingezeichnet. Außerdem sind in der Fig. 2 auch die auf einer Projektionslinie 14a gelegene Objektpunkte 15b des Autos 33, das sich von dem Augenpunkt 20 aus gesehen hinter dem Haus 31 befindet, 15a des Hauses 31 und 15d des vom Augenpunkt 20 aus gesehen vor dem Haus 31 befindlichen Fahrrades 34 eingezeichnet. Da die genannten Objektpunkte 15a, 15b, 15d auf ein und derselben Projektionslinie 14 gelegen sind, kommen diese Punkte für sich gesehen an derselben Stelle 15c auf einer virtuellen Abbildungsebene 21 zur Darstellung.

Um die zur Anzeige zu bringende dreidimensionale Umwelt 11 auf der zylindrischen Wand 3 zur Darstellung zu bringen, werden die Texturen 13 in bezug auf einen Augenpunkt 20 aufgrund entsprechender Projektionslinien 14 auf die virtuelle Abbildungsebene 21 projiziert (Fig. 2). Dieses Verfahren läuft in Echtzeit ab, da die Umwelt 11 zeitveränderlich ist und in der Simulation zeitecht zur Darstellung gebracht werden muß. Diese Projektion der Texturen 13 auf die virtuelle Abbildungsebene 21 in bezug auf den Augenpunkt 20 erfolgt in einer Datenverarbeitungsanlage, beispielsweise in dem Bildgenerator 5, der dem Simulationsraum 1 zugeordnet ist. Mittels des Bildgenerators 5 und eventuell weiterer Rechenanlagen wird die Darstellung auf der virtuellen Abbildungsebene 21 auf die reale Abbildungsfläche, z.B. auf einem Monitor oder die zylindrische Wand 3 übertragen.

Erfindungsgemäß wird zur Umsetzung der virtuellen Umwelt 11 auf eine reale Darstellungsfläche in einem Anfangsschritt z.B. eine virtuelle Umwelt 11 auf die virtuelle Abbildungsebene 21 nach den optischen Gesetzen in bezug auf den Augenpunkt 20 projiziert. Der Augenpunkt 20 entspricht dabei einem fiktiven oder dem realen Ort eines Betrachters, also z.B. dem Standort der Fluglotsen im Simulationsraum 1. Die im Anfangszustand auf der virtuellen Abbildungsebene 21 dargestellte Umwelt 11 entspricht also dem Anfangszustand der simulierten Umwelt. Die Umwelt 11 verändert sich automatisch, oder aufgrund der Einwirkung von Zufallsgeneratoren oder aufgrund manueller oder automatischer Eingaben oder Veränderungen einer realen oder virtuellen Umwelt 11 über die Zeit. Um diese zeitlichen Veränderungen der Umwellt 11 auf die virtuelle Abbildungsebene 21 zu übertragen, wird die Abbildung von Objekten bzw. Objektpunkten der Umwelt 11 in jedem Iterationsschnitt berechnet. Diese Berechnung erfolgt erfindungsgemäß aber nur bezüglich der Objekte, deren Eigenschaften sich im Vergleich zum vorhergehenden Iterationsschnitt verändert haben. Zur Festellung dieser Veränderung wird auf die zweidimensionalen Darstellungen der dreidimensionalen Texturen 13 im jeweils vorangehenden Iterationszyklus Bezug genommen. Die Abbildung jeder zur Darstellung zu bringender 3D-Textur 13 wird dabei also nicht wie im Stand der Technik in jedem Zyklus, beispielsweise 60mal in der Sekunde, auf die virtuelle Abbildungsebene 21 vollständig von neuem berechnet, wobei zusätzlich gegenseitige Verdeckungen in bezug auf den jeweiligen Augenpunkt 20 aufgrund unterschiedlicher Entfernungen der 3D-Texturen 13 zur virtuellen Abbildungsebene 21 durch einen entsprechenden geometrischen Vergleich im einzelnen zusätzlich innerhalb jedes Iterationsschnittes berücksichtigt werden müßten. Stattdessen wird von den bereits im vorausgehenden Berechnungszyklus ermittelten zweidimensionalen Projektionen auf der virtuellen Abbildungsebene 21 ausgegangen, um die zeitlichen Veränderungen der virtuellen Umwelt 11 für den jeweiligen Berechnungszyklus darzustellen. Die bereits vorangegangenen Iterationszyklen berechneten und zur Darstellung auf der Abbildungsebene 21 gebrachten Darstellungen, die sich zum jeweils gegenwärtigen Iterationssschnitt nicht verändert haben, werden im gegenwärtigen Iterationssschnitt nicht berechnet. Der Bildgenerator 5 speichert für jeden aus einer vorgegebenen Rasterung oder Auflösungen ergebenden Punkt auf der virtuellen Abbildungsebene 21, die Entfernung des entsprechenden Punktes in der entsprechenden 3D-Textur 13 in der Umwelt 11 vom Augenpunkt 20. In jedem Berechnungszyklus brauchen dann nur die jeweiligen Abbildungen der Objektpunkte von Objekten der Umwelt 11 auf die Abbildungsebene 21 berechnet zu werden, deren Darstellung aufgrund vorbestimmter Eigenschaften dieser Objektpunkte, z.B. die Entfernung zum Augenpunkt 20 bzw. der Abbildungsebene 21, gegenüber anderen auf der jeweils derselben Projektionslinie 14 liegenden Objektpunkten relevant und somit vorzunehmen sind. Die Abbildungen der Gegenstände, die für einen bestimmten Berechnungszyklus im Vergleich zu vorhergehenden ruhen, werden aus dem jeweils vorausgehenden Berechnungszyklus übernommen.

Für jeden Abbildungs- oder Pixelpunkt in der virtuellen Abbildungsebene 21, der von einer Bewegung in der realen oder virtuellen Umwelt 11 betroffen ist, wird demgemäß ein Vergleich durchgeführt. In diesem Vergleich werden die Eigenschaften des im vorangegangenen Zyklus auf der virtuellen Abbildungsebene 21 abgebildeten Pixelpunkts mit den Eigenschaften des Pixelpunkts im aktuellen Zyklus verglichen. Sind die Eigenschaften (z.B. Entfernung oder Verdunklung durch Schattenwurd) im aktuellen Zyklus für die Darstellung eines Gegenstandspunkts 15d einer 3D-Textur 13 auf die virtuelle Abbildungsebene 21 gegenüber den Eigenschaften eines demselben Pixelpunkt entsprechen-den Gegenstandspunkts 15a, 15b einer anderen 3D-Textur 13 für die Darstelung relevant, so gelangt dieser an der Stelle 15c als Abbildungspunkt auf der virtuellen Abbildungsebene 21 zur Darstellung.

Zu den verglichenen Eigenschaften gehört insbesondere die Entfernung des jeweiligen Punktes eines Objekts der virtuellen Umwelt 11. Beispielsweise ersetzt ein Punkt 15d eines Objekts der virtuellen Umwelt 11 einen anderen Punkt 15a, 15b desselben oder eines anderen Objekts der virtuellen Umwelt aus einem vorhergehenden Zyklus, wenn der erste Punkt eine geringere Entfernung zur virtuellen Abbildungsebene 21 aufweist. Bei dem erfindungsgemäßen Verfahren werden nur die Abbildungspunkte auf der Abbildungsebene 21 untersucht, die sich gegenüber einem vorhergehenden Zyklus verändern. Dabei wird in einem Berechnungszyklus unmittelbar von dem Abbildungspunkt 15c eines Objektpunkts 15a auf der Abbildungsebene 21 ausgegangen, der im vorangegangenen Iterationszyklus bereits zur Darstellung gebracht worden ist. Verändert sich von einem Zyklus zu einem nachfolgenden Zyklus eine Eigenschaft eines Abbildungspunkts auf der Abbildungsebene 21, der einem Objektpunkt in der Umwelt 11 entspricht, oder zwei verschiedenen Punkten ein und desselben Objekts in der virtuellen Umwelt 11 oder zwei verschiedenen Punkten verschiedener Objekte in der virtuellen Umwelt 11, so wird die Eigenschaft des neuen Abbildungspunkts auf der Abbildungsebene 21, also z.B. Farbe, Helligkeit ermittelt. Es werden dann nur die Abbildungspunkte der zeitveränderlichen Objektpunkte ermittelt.

Der Vorteil des erfindungsgemäßen Verfahrens liegt darin, daß nicht mehr jedes darzustellende Objekt der Umwelt 11 für die Abbildung auf der virtuellen Abbildungsebene 21 in jedem Berechnugszyklus berechnet werden muß. Stattdessen wird eine deutliche Reduzierung des Rechenaufwandes erreicht, da nur eine Berechnung der sich von einem vorhergehenden zu dem dem aktuellen Berechnungszyklus verändernde Abbildungspunkt für die Darstellung auf der virtuellen Abbildungsebene 21 berechnet werden muß.

Beispielsweise wird in einer Mehrzahl von Berechnungszyklen ein Objekt, beispielsweise ein Haus 31 auf die virtuelle Abbildungsebene 21 projiziert. In bezug auf den Augenpunkt 20 ergibt sich dadurch auf der virtuellen Abbildungsebene 21 eine zweidimensionale Darstellung 32 des Hauses 31. Ein sich in der Umwelt 11 befindliches Auto 33 wird auf der virtuellen Abbildungsebene 21 nur dargestellt, wenn das Auto 33 vom Augenpunkt 20 aus gesehen nicht vom Haus 31 verdeckt wird. In der Fig. 2 wird das Auto 33 vom Haus 31 verdeckt und wird somit auf der Abbildungsebene 21 nicht dargestellt. Hingegen kommt das bezüglich des Augenpunkts 20 vor dem Haus 31 befindliche Fahrrad 34 auf der Abbildungsebene 21 zur Darstellung. Erfindungsgemäß erfolgt nur einmal eine vollständige Berechnung der gesamten Umwelt 11 in bezug auf die virtuelle Abbildungsebene 21. Bewegte Teile, wie das Auto 33 haben also nur dann Einfluß auf die virtuelle Abbildungsebene 21,wenn die einzelnen Objektpunkte des Flugzeugs 33 aus Sicht des Augenpunkts 20 nicht von einem anderen Objekt der virtuellen Umwelt 11, z.B. vom Haus 31 verdeckt werden. Es werden also in einem Berechnungszyklus nur die Punkte der in der Umwelt 11 bewegten Objekte oder Texturen 13 betrachtet und diese Punkte mit dem entsprechenden, d.h. vom Augenpunkt 20 aus gesehen, auf derselben Projektionslinie liegenden Punkt eines anderen Objekts der virtuellen Umwelt 11 verglichen. Dabei wird jedem Objektpunkt grundsätzlich eine momentane Tiefeninformation beigefügt. Die Tiefeninformationen und anderen Eigenschaften der auf einer Projektionslinie liegenden Punkte verschiedener Objekte oder Texturen oder verschiedener Teile derselben werden dann verglichen. Es gelangt dann ein anderer Objektpunkt oder eine Eigenschaft desselben zur Darstellung auf der virtuellen Abbildungsebene 21, wenn dieser bzw. diese eine geringere Tiefe bzw. geringere Entfernung von der virtuellen Abbildungsebene 21 entlang der zugehörigen Projektionslinie aufweist.

## Patentansprüche

1. Simulationsverfahren zur Darstellung einer Umwelt (11) mit Objekten (15, 31, 33, 34) auf eine virtuelle Abbildungsebene (21) in Realzeit zur Erzeugung einer zweidimensionalen Darstellung der Umwelt (11), mit den folgenden Schritten:
Berechnung der Abbildung und Darstellung der Objekte (30, 31) der Umwelt (11) auf der virtuellen Abbildungsebene (21) und Speichern der jeweiligen Entfernungen der zugehörigen Objektpunkte zum Augenpunkt, und in den nachfolgenden Iterationsschritten:
Ermittlung derjenigen Objekte, deren Entfernung zum Augenpunkt (20) sich in bezug auf den jeweils vorangegangenen Iterationsschnitt geändert haben, und für diejenigen Bildpunkte, die durch die Veränderung eines Objektes betroffen sind, Vergleich der Entfernungen der Objektpunkte der veränderten Objekte mit den Entfernungen, die für diesen Bildpunkt gespeichert sind,
Berechnung der Abbildung und Darstellung derjenigen Objektpunkte (15d), deren Objekte sich im Vergleich zum vorangegangenen Iterationsschnitt verändert haben und die näher als der im vorangegangenen Iterationsschritt dargestellte Objektpunkt (15a) am Augenpunkt (20) liegen,
sowie Darstellung der Objektpunkte von Objekten, die sich im Vergleich zum vorangegangenen Iterationsschritt nicht verändert haben, aufgrund der in einem vorangegangenen berechneten Abbildung.
